# EUROPEAN PATENT SPECIFICATION

(11) **EP 2 127 335 B1**
(45) Date of publication and mention of the grant of the patent: **04.01.2012**
(21) Application number: 07730016.8
(22) Date of filing: 08.06.2007
(51) Int. Cl.: H04M 1/23, G06F 3/033

(54) **PORTABLE DEVICE WITH THREE-DIMENSIONAL CONTENT-NAVIGATION SYSTEMS INTERACTING ON OPPOSING SURFACES**
TRAGBARES GERÄT MIT AUF GEGENÜBERLIEGENDEN OBERFLÄCHEN WECHSELWIRKENDEN DREIDIMENSIONALEN INHALTSNAVIGATIONSSYSTEMEN
DISPOSITIF PORTABLE AVEC SYSTÈMES DE NAVIGATION DE CONTENU TRIDIMENSIONNELS INTERAGISSANT SUR DES SURFACES OPPOSÉES

(30) Priority: 12.01.2007 US 622502
(43) Date of publication of application: 02.12.2009
(73) Proprietor: Sony Ericsson Mobile Communications AB, 221 88 Lund (SE)
(72) Inventor: KARLBERG, Lars Johan Ragnar, S-222 29 Lund (SE); AHLGREN, Erik, S-242 31 Hörby (SE)
(74) Representative: Hagström, Lena
(86) International application number: PCT/EP2007/055660
(87) International publication number: WO 2008/083858

(56) References cited:
- EP-A- 1 429 356
- WO-A-2004/053828
- WO-A-2005/064445
- DE-A1- 2 827 075
- DE-A1- 2 903 898
- DE-A1- 4 336 131
- DE-A1- 19 732 287
- JP-A- 1 176 615
- US-A- 5 821 921
- US-A- 5 995 104
- US-A1- 2006 154 700

## Description

### FIELD OF THE INVENTION

The present invention relates to user interfaces, and may be particularly suitable for portable terminals incorporating displays.

### BACKGROUND OF THE INVENTION

Portable devices such as gaming systems and wireless terminals can be compact and may be configured to be handheld. Certain terminals may allow a one-hand operating format. The weight and size of portable and/or wireless terminals has been decreasing with some contemporary wireless terminals being less than 11 centimeters in length and their displays sized to be correspondingly compact. In operation, it may be desirable to configure devices so as to provide increased amounts of visual information, with audio and/or text based input/outputs, using the relatively compact displays, particularly as the wireless terminals may support multiple wireless communication modalities. Thus, as the portable devices themselves may decrease in size, the amount of content that is displayable or desired may increase with the increase in content wireless services.

Browsing on small display screens can be difficult, particularly when some content or applications may be in three dimensions, particularly where content may reside in the network as opposed to the portable devices. It is believed that navigation in three dimensions on conventional devices typically involves two-hand positions or shifts of finger position or may be non-intuitive as to direction.

DE 43 36 131 A1 to Siemens AG proposes a handheld controller for an appliance. DE 28 27 075 A1 to Hertz Inst. proposes a remote control for a television with T1 and T2 key fields that activate function keys either on the front or back surface of the device. WO 2005/064445 A to Nokia proposes a 4-way front surface mounted joystick on a mobile telephone.

### SUMMARY OF THE INVENTION

Embodiments of the present invention are directed to improved user interfaces for three-dimensional navigation of content on displays.

Some embodiments are directed to portable devices that include: (a) a portable housing; (b) a display held by the housing; (c) a first user interface member residing on a front portion of the housing configured to electronically navigate data on the display; and (d) a second user interface member residing on a back portion of the housing configured to electronically navigate data on the display.

The first and second user interface members may be in communication whereby inward pressure exerted against the first user interface member automatically substantially concurrently causes outward pressure to be exerted against the second user interface member. Also, or alternatively, the first and second user interface members may be in communication whereby inward pressure exerted against the second user interface member automatically substantially concurrently causes outward pressure to be exerted against the first user interface member.

The first and second user interface members can be tactile input keys configured to allow a user to push against the respective key to navigate content on the display. The first and second interface members can be configured to cooperate to allow a user to move in and out of content substantially in a Z-axis direction.

The first user interface member can include a navigation key configured so that vertical depression causes inward navigation of content on the display. Similarly, the second user interface member can include a navigation key configured so that vertical depression causes outward navigation of content on the display.

The first and second user interface members may be configured to allow a user to navigate content in the X, Y and Z-axis directions.

The first and second user interface members may be configured so that one of the first and second members allows a user to navigate content in the X, Y and Z-axis directions, and the other of the first and second interface members is configured to allow a user to navigate content only in the Z-axis direction.

The first user interface member may be configured to allow a user to electronically navigate in a first direction that extends in a direction that is into the display in response to a user pushing the first user interface member inward and the second user interface may be configured to electronically navigate content in a direction that extends out of the display in response to a user pushing the second user interface member inward.

The first user interface member and the second user interface member may be in cooperating communication whereby inward movement of the first member automatically causes outward movement of the second member and inward movement of the second member automatically causes outward movement of the first member to direction that extends out of the display in response to a user pushing the second user interface member inward.

The first user interface member and the second user interface member may be in cooperating communication whereby inward movement of the first member automatically causes outward movement of the second member and inward movement of the second member automatically causes outward movement of the first member to thereby provide intuitive tactile feedback to a user corresponding to inward or outward navigation of content.

The first and second interface members can be generally aligned, with the first interface member residing above and/or in front of the second interface member to allow a user to engage both interface members allowing a user to navigate in 3D without shifting finger position. Alternatively, the first and second interface members can be misaligned, with the first interface member residing above and/or in front of the second interface member to allow a user to engage both interface members allowing a user to navigate in 3D without shifting finger position.

The first interface member can be a medially residing multi-direction navigation with select capability member, and the second interface member can reside in a recess at a location below the first interface member in the back of the housing.

In some embodiments, the device also includes a transceiver in the housing that transmits and receives wireless communications signals and is in communication with the display.

The device may also include a 3-D navigational input that allows a user to (selectively) activate a 3-D navigation mode whereby the first and second user interface members are both active user interface inputs.

The first and second user interface members can be in communication whereby user depression of one of the members causes a tactile response in the other member detectable by a user.

Other embodiments are directed to methods for navigating content of data on a display on a front side of a housing. The methods include: (a) accepting user input via a first user interface member on the front of the housing to navigate content presented by a display; (b) accepting user input via a second user interface member on a back side of the housing to navigate content presented by the display; and (c) navigating content in three-dimensions presented by the display in response to the user input to the first and second interface members without requiring shifts of finger positions to thereby allow a user to intuitively control navigational movement in three-dimensions.

The accepting user input via the first user interface member may be configured to allow a user to press the first interface member a distance in a direction that is into the display to navigate inward whereby the second user interface member automatically moves outward a corresponding distance. The accepting user input to the second user interface may be configured to allow a user to press the second interface member a distance in a direction that is into the display to navigate upward whereby the first user interface member automatically moves outward a corresponding distance.

Still other embodiments are directed to computer program products for navigating content on a display in three dimensions. The computer program product includes computer usable storage medium having computer-readable program code embodied in the medium. The computer-readable program code includes: (a) computer readable program code that is configured to navigate inward through or to content on the display in response to user contact of a first interface member accessible on a front portion of a portable device; and (b) computer readable program code that is configured to navigate outward through or to content on the display in response to user contact of a second interface member accessible on a back portion of the portable device.

The computer program product may also include computer readable program code that is configured to cause the first and second interface members to cooperate to provide tactile feedback to a user corresponding to translation direction or depth into or out of content on the display.

Other embodiments are directed to mobile radiotelephones that include: (a) a portable housing; (b) a display held by the housing; (c) a transceiver held in the housing; (d) a first user interface member residing on a front portion of the housing configured to electronically navigate data on the display; and (e) a second user interface member residing on a back portion of the housing configured to electronically navigate data on the display.

In some embodiments, the first and second user interface members are configured to allow a user to electronically navigate data presented by the display in three-dimensions. The first and second members can be in communication whereby inward pressure exerted against the first user interface member automatically substantially concurrently causes outward pressure to be exerted against the second user interface member.

Still other embodiments are directed to portable devices that include: (a) a portable housing; (b) a display held by the housing; (c) a first user interface member residing on a front portion of the housing configured to electronically navigate data on the display; and (d) a second user interface member in communication with the display residing on the housing, the second user interface member configured to allow a user to electronically navigate data in a Z-axis direction extending in and out of the display.

The first user interface member can include a multiple-direction navigation select key, and the second user interface member can include a joystick member.

Other embodiments are directed to portable devices that include: (a) a portable housing; (b) a display held by the housing; (c) a first user interface member residing on a first side of the housing configured to electronically navigate data on the display; and (d) a second user interface member residing on a second opposing side of the housing configured to electronically navigate data on the display. The first and second user interface members are in communication whereby inward pressure exerted against the first user interface member automatically substantially concurrently causes outward pressure to be exerted against the second user interface member.

Additional embodiments are directed to gaming systems. The systems include: (a) a user interface device configured to communicate with an electronic display; (b) a first user interface input member residing on a front portion of the housing configured to electronically navigate content on the display; and (c) a second user interface input member residing on a back portion of the housing configured to electronically navigate content on the display. The first and second user interface input members are in communication whereby inward pressure exerted against the first user interface member automatically substantially concurrently causes outward pressure to be exerted against the second user interface member.

It is noted that features of embodiments of the invention as described herein may be methods, systems, computer programs or a combination of same, although not specifically stated as such. The above and other embodiments will be described further below.

### BRIEF DESCRIPTION OF THE DRAWINGS

**Figure 1** is a side schematic view of a portable device having user interfaces that can navigate three- dimensional ("3D") content according to embodiments of the present invention.
**Figure 2** is a schematic front view of a portable device with a display and user interface according to embodiments of the present invention.
**Figure 3** is a schematic rear or back view of the portable device with the display shown in **Figure 2** according to embodiments of the present invention.
**Figure 4** is a schematic side view of a portable device with opposing user interfaces according to embodiments of the present invention.
**Figure 5** is a schematic front view of a portable device with side opposing user interfaces according to embodiments of the present invention.
**Figure 6A** is a side view of a portable device having first and second spaced apart user interface members according to embodiments of the present invention.
**Figure 6B** is a side view of a portable device having a unitary interface member according to embodiments of the present invention.
**Figure 7** is a side perspective view of a portable device according to embodiments of the invention.
**Figure 8** is a front view of a portable device according to embodiments of the invention.
**Figure 9** is a partial cutaway schematic of an exemplary wireless terminal according to embodiments of the present invention.
**Figure 10** is a flow chart of operations that can be performed according to embodiments of the present invention.
**Figure 11** is s a flow chart of operations that can be performed according to embodiments of the present invention.
**Figure 12** is a block diagram of an exemplary content navigation data processing system according to embodiments of the present invention.

### DETAILED DESCRIPTION

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. It will be appreciated that although discussed with respect to a certain embodiment, features or operation of one embodiment and/or figure can apply to others.

In the drawings, the thickness or size of lines, layers, features, components and/or regions may be exaggerated for clarity. It will be understood that when a feature, such as a layer, region or substrate, is referred to as being "on" another feature or element, it can be directly on the other element or intervening elements may also be present. In contrast, when an element is referred to as being "directly on" another feature or element, there are no intervening elements present. It will also be understood that, when a feature or element is referred to as being "connected" or "coupled" to another feature or element, it can be directly connected to the other element or intervening elements may be present. In contrast, when a feature or element is referred to as being "directly connected" or "directly coupled" to another element, there are no intervening elements present.

The terms "comprises, comprising" and derivatives thereof, mean that the recited feature, operation, integer, component, step, and the like is present but does not exclude or preclude the presence or addition of one or more other, alternative or different features, integers, steps, components or groups.

The term "handheld" refers to compact-sized devices that can be held in and operated by one or both hands of a user.

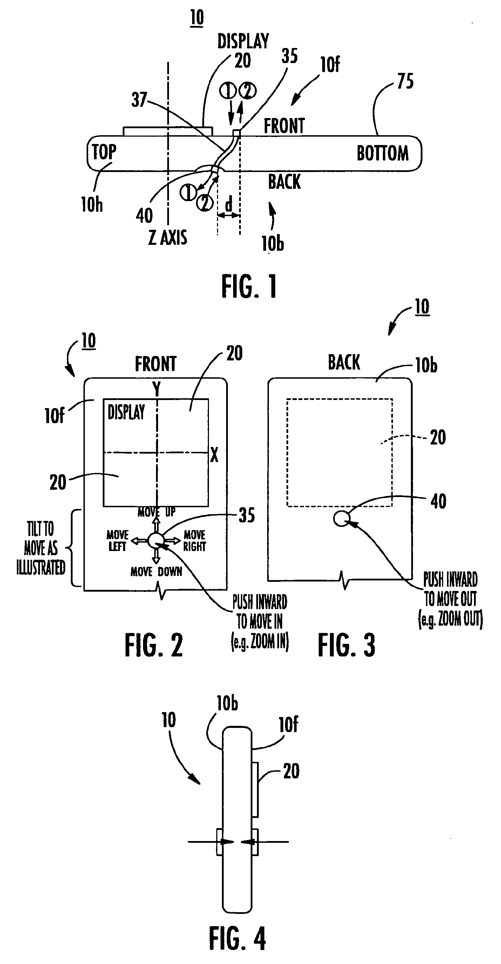

The terms "Z-axis" or "Z" dimension and the like refer to a direction that is into and out of the display as shown by the broken line representation in Figure 1.

As used herein, the term "display" refers to a device that is configured with at least one display. The display device may be provided in connection with and/or cooperate with a game console and/or an electronic game system (stationary or portable and wired or wireless). The term "portable device" refers to portable equipment, including portable communication devices such as a PALM PILOT, laptop, notebook or other portable computer or game configurations, including wireless and non-wireless terminal configurations as well as self-contained gaming devices. The term "wireless terminal" may include, but is not limited to, a cellular wireless terminal with or without a multi-line display; a Personal Communications System (PCS) terminal that may combine a cellular wireless terminal with data processing, facsimile and data communications capabilities; a PDA (personal digital assistant) that can include a wireless terminal, pager, internet/intranet access, web browser, organizer, calendar and/or a GPS receiver; and a conventional laptop and/or palmtop receiver or other appliance that includes a wireless terminal transceiver. Wireless terminals may also be referred to as "pervasive computing" devices and may be mobile terminals including portable radio communication equipment. Thus, the term "portable device" (which can also be referred to interchangeably as "a mobile terminal") includes all portable equipment such as mobile telephones, pagers, and communicators, including, but not limited to, smart phones, electronic organizers, gaming devices, and the like.

Embodiments of the present invention will now be described in detail below with reference to the figures. **Figure 1** illustrates a portable device **10** that includes a housing **10h** and a display **20** respectively. As shown, the device **10** also includes first and second user interface members **35**, **40**. The device **10** may also include a battery or other power source and may be configured to operate with a power cord (not shown). The first user interface member 35 can reside on or be accessible from a front of the housing **10f**, while the second user interface member **40** can reside on or be accessible from the back of the housing **10b**.

The user interface members **35**, **40** may be particularly suitable for displays that provide three-dimensional data presentation such as entertainment gaming applications or other uses with 3D data presentation such as, for example, media or entertainment services, including GOOGLE EARTH. Thus, in some data applications, the user interface members **35**, **40** are configured to allow three-dimensional navigation of content.

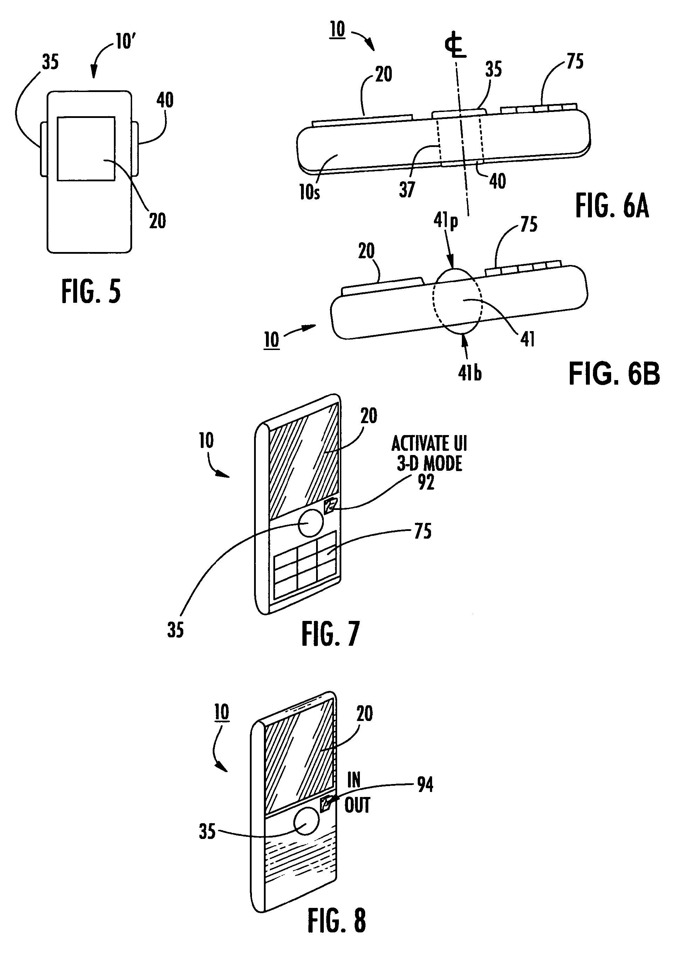

The first and second user interface members **35**, **40** may be misaligned as shown in **Figure 1** or may be substantially aligned as shown in **Figure 6A**. The members **35**, **40** may have substantially the same size, shape or configuration may or may be different in size or shape. As shown in **Figure 1**, if misaligned, the centers of the two interface members **35**, **40** may reside within a distance "d" that can be between about 2 inches (5.08 cm) laterally and longitudinally of each other.

The two interfaces **35**, **40** may reside on other opposing surfaces of the device **10**, generally aligned, such as, for example, the long sides as shown in **Figure 5**. When placed on the sides **10s** of the device, offset or aligned, typically proximate the display **20**, the side interfaces may be configured to navigate in the Z-axis direction or alternatively, the X and/or Y axis directions. Combinations of side and front and back interface members may also be used according to particular embodiments of the invention.

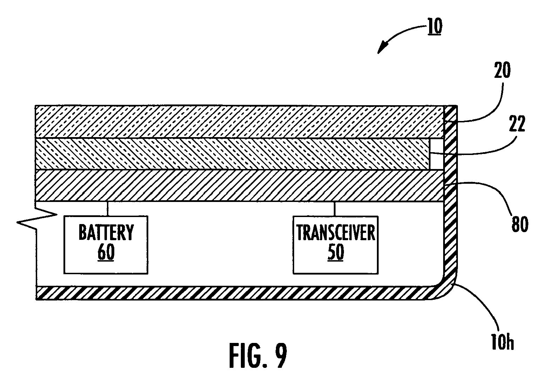

The device **10** may be a wireless terminal. As is well known to those of skill in the art, a wireless terminal device **10** may also include other electronic components such as those shown in **Figure 9**, including, for example, a printed circuit board **80**, a transceiver **50**, and a battery **60**. In addition, the device **10** may also optionally include a tactile and/or touch screen electronic keypad 75 (**Figures 1**, **4**).

In some embodiments, a user may contact the user interface members **35**, **40** to "zoom" or move in a desired direction, and this typically includes the ability to navigate content along the Z-axis (in a direction that is into and out of the display). For example, the upper member 35 can be used to navigate inward, to, for example, move down, view details or read text and the like, while the second member **40** can be used to navigate outward to move outward and/or get an overview of graphics or data. Using the "Z" dimension to present and navigate data can increase the amount (typically about twice the size) of visual area in a relatively limited perimeter or footprint and/or allow more realistic interaction in interactive electronic games (without requiring a slide out or added length in the "X and/or Y" dimension). It is noted that the term "3D" refers to a display, navigation or data presentation of components shown in 2D that appear to be in 3D, and does not require 3D glasses, but the term can also refer to "true" 3D displays of data.

As shown in **Figure 2**, at least one of the interface members **35**, **40** (shown as the front member **35**) can be configured to allow a user to navigate as conventional, *i.e.*, vertically and horizontally by tilting and/or pressing the user interface member 35 upwards/downwards and sideways, respectively. The user can also navigate inward (*e.g.*, zoom in) by pressing the user interface member 35 on the front (which can be a center user select key residing under the display). As shown in **Figure 3**, a user can navigate outward (*e.g.*, zoom out) by pressing the member **40** on the back inward. Each member can be pressed concurrently to allow a user to intuitively navigate in three-dimensions. **Figure 4** illustrates the inward movement of the two members **35**, **40** to navigate content. The user interface members **35**, **40** can provide 3D navigation that is ergonomic and intuitive because of interface member placement, cooperation and/or tactility. In some embodiments, the interface members **35**, **40** are configured and positioned so that a user can navigate in three-dimensions without requiring shifts of finger positions.

Each or both of the interface members **35**, **40** may be flush, protrude and/or be recessed into the housing **10h**. As shown in **Figure 1**, the member **40** resides in a contoured finger recess or groove for improved ergonomics. However, the members **35**, **40** can protrude (**Figure 4**) and/or reside substantially flush (**Figure 6A**) with the bounds of the housing. The surface of the members **35**, **40** may be resiliently configured, such as comprising an elastomeric outer covering. However, the members **35**, **40** may be rigid or substantially rigid (metallic or polymer) and may be configured to provide the same tactility to a user. In some embodiments, at least the front member **35** can be configured as a select button with tilt capacity (**Figure 2**) for multiple-way (such as 4 or 8-way) navigation with center select, or other desired input configuration.

In some embodiments as shown in **Figure 6B**, the user interface members **35**, **40** can be integrated as a single member **41** with a front portion **41p** accessible via the front of the housing and a back portion **41b** accessible via the back of the housing. Depression of the back portion **41b** causes the navigation outward and depression of the front portion **41p** causes navigation inward. The forward portion **41p** may move (*e.g.*, project outward a distance) in response to depression (*e.g.*, movement a distance inward) of the back portion **41b** and vice versa. Alternatively, the member **41** may "float" in the housing to move in the desired Z-direction, forward or rearward, and may be able to provide navigation in the X, Y axis directions as well.

In other embodiments, the user interface members **35**, **40** are separate members that can cooperate and/or be connected **37** (**Figures 1**, **6A**) to be in electrical and/or mechanical communication so that when the front user interface member **35** is pushed inward (noted schematically by the number "1" in the circle in **Figure 1**), the back user interface member **40** is pushed outward (noted by the corresponding number "1" in the circle in **Figure 1**), typically proportionally. The reverse operation can also apply (*i.e.*, pushing the back user interface forward causes the front user interface to be pushed outward, each shown by the number "2" in the circle in **Figure 1**). The connection can be achieved using any suitable means including, for example, mechanical, electrical, electro-mechanical, fluid (hydraulic or pneumatic) pressure or combinations of same.

For pneumatic or hydraulic configurations, a fluid channel can extend between the members **35**, **40** and a small pump with the air or other fluid can be held in the device (not shown). The members **35**, **40** can include inflatable segments or bladders in communication with the pump that can provide the tactile feedback. For mechanical connections, a mechanical linkage, piston, gear or cam connection or other or components or combinations of mechanical components can be configured to move the interface members **35**, **40** to provide the desired tactile feedback feature to a user. For electrical configurations, the two members **35**, **40** can be electrically connected with a circuit or membrane to cause an increase in height, depth or rigidity of one member as the other member is pushed (or even pulled). The device **10** can include at least transducer or other sensor proximate each member **35**, **40** which can detect movement of a respective member and a microprocessor in communication with the sensor that can monitor for the sensed data to automatically direct the operation of the components that cause movement of the other. Other user interface member operative feedback and tactile output/input connections may be used.

In some embodiments, the 3D navigation mode can be selectively activated only when needed. The selective activation can be automatic such as when a user attempts to navigate in the Z direction or upon opening certain data applications, or can be manually effectuated. In some embodiments, the bottom interface member **40** can be inactive during normal operation. **Figure 7** illustrates a portable device **10** that can include a user activation key **92** that allows selective operation of the 3D navigation mode. The key **92** can be a mechanical "on" or "off" function key, or an electronic (touch screen or icon) key. The key **92** may also be a voice-activated key that can be used to initiate the desired 3D navigation mode.

**Figure 8** illustrates another embodiment of the invention. In this embodiment, the device **10** can include the front interface member **35** and another front interface member **94** that can be toggled, at least longitudinally, (up=in, down=out) to navigate inward or outward. Thus, a user can navigate in the X and Y directions using the first member **35** and in the Z direction using the member **94**. In some embodiments, the member **94** can be configured as a joystick that allows multidimensional navigation.

As shown in **Figure 9**, the device may include a plurality of stacked displays, with each display **20**, **22** held in proximity by the housing **10h**. In addition, although shown as a single display, additional displays in additional layers and/or side-by-side, may also be used, typically so that a user can view data serially and/or concurrently on the different displays. In some embodiments the first display **20** can provide a protective barrier for the second underlying second display **22** (**Figure 9**), and the first display may have less resolution or black and white operation while the other display can be in color. The display **20** (or **22**, **Figure 9**) can be a (typically full) color graphic display, such as a 1/8 VGA display. At least one display **20**, **22** can provide a toolbar, options, navigational control, status locator, email access, or orientation tracking, and the like. In certain particular embodiments, the data displayed across the Z-spatial dimension on multiple layered displays may be configured to cooperate to provide a three-dimensional data presentation.

**Figure 9** is a side cross-sectional view of one embodiment of a portable device that can be configured as a wireless terminal **10** with the first display **20** and the optional second display **22** positioned to the left (above) a printed circuit board **80** and in communication with a transceiver **50** and battery **60**. A conventional arrangement of electronic components that allow a wireless terminal to transmit and receive wireless terminal communication signals will be described in further detail. Non-wireless configurations do not require the transceiver. An internal and/or external antenna associated with the wireless terminal device **10** is configured for receiving and/or transmitting wireless terminal communication signals and is electrically connected to transceiver circuitry components **50**. The transceiver components can include a radio-frequency (RF) transceiver that is electrically connected to a controller such as a microprocessor. The controller can be electrically connected to a speaker that is configured to transmit a signal from the controller to a user of a wireless terminal. The controller can also electrically connected to a microphone that receives a voice signal from a user and transmits the voice signal through the controller and transceiver to a remote device. The controller can be electrically connected to a keypad and the displays that facilitate wireless terminal operation. The design of the transceiver, controller, and microphone are well known to those of skill in the art and need not be described further herein.

The wireless communication device **10** shown in **Figure 9** may be a radiotelephone type radio terminal of the cellular or PCS type, which makes use of one or more antennas according to embodiments of the present invention.

Antennas, according to embodiments of the present invention may be useful in, for example, multiple mode wireless terminals that support two or more different resonant frequency bands, such as world phones and/or dual mode phones. In certain embodiments, the wireless device **10** can operate in multiple frequency bands such as at least one low frequency band and at least one high frequency band. The terms "low frequency band" or "low band" are used interchangeably and, in certain embodiments, include frequencies below about 1 GHz, and typically comprises at least one of 824-894 MHz or 880-960 MHz. The terms "high frequency band" and "high band" are used interchangeably and, in certain embodiments, include frequencies above 1 GHz, and typically frequencies between about 1.5-2.5 GHz. Frequencies in high band can include selected ones or ranges within about 1700-1990 MHz, 1990-2100 MHz, and/or 2.4-2.485 GHz. The device **10** may be configured to support GPS and/or Bluetooth operations, as well as other positioning systems such as GALILEO, GONAS, and the like.

In certain embodiments, the device **10** may be configured to provide resonance for a global positioning system (GPS) as the terminal **10** can include a GPS receiver. GPS operates at approximately 1,575 MHz. GPS is well known to those skilled in the art. GPS is a space-based triangulation system using satellites and computers to measure positions anywhere on the earth. Compared to other land-based systems, GPS is less limited in its coverage, typically provides continuous twenty-four hour coverage regardless of weather conditions, and is highly accurate. In the current implementation, a constellation of twenty-four satellites that orbit the earth continually emit the GPS radio frequency. The additional resonance of the antenna as described above permits the antenna to be used to receive these GPS signals.

The display(s) may be configured to operate with touch screen input. Suitable software and associated locational grid hardware and operating structures are well known to those of skill in the art. *See e.g.* U.S. Patent No. 3,857,022 to Rebane et al., entitled *Graphic Input Device*; U.S. Patent No. 5,565,894 to Bates et al., entitled *Dynamic Touchscreen Button Adjustment Mechanism*. In certain embodiments, the wireless communication device **10** can include a touch screen on the display **20** and a keyboard or keypad entry **75** as shown in **Figure 1**. The keypad **75** may be an accessory item that may be added or removed depending on the set-up desired by the user or OEM. Alternatively, the keypad **75** may be mounted on a flip member or configured to reside mounted on the housing **10h** over the first display **20** or on a sliding member.

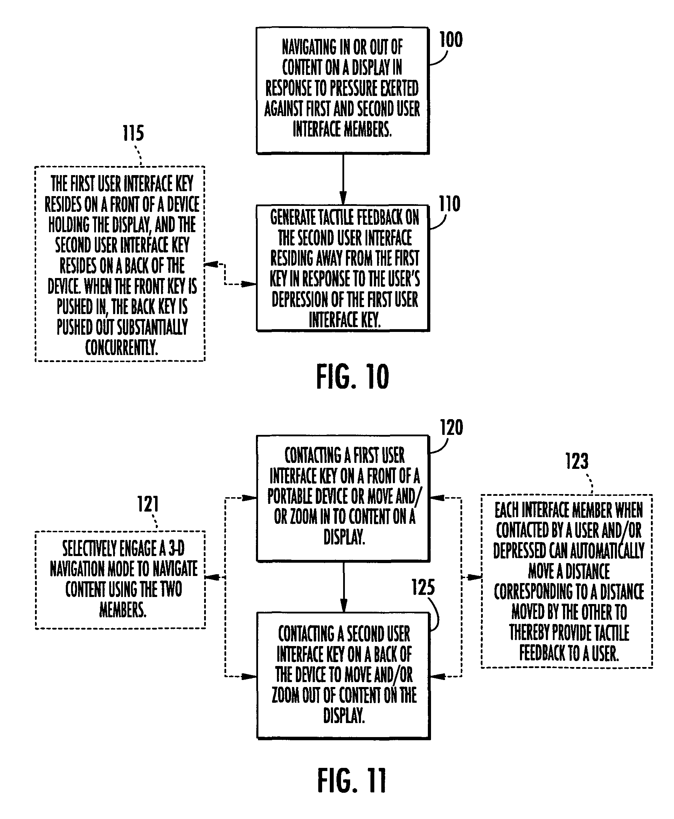

**Figure 10** illustrates exemplary operations that can be used to carry out embodiments of the invention. Navigating in or out of content on a display in response to pressure exerted against a first user interface member (block **100**). Generating tactile feedback on a second user interface member in response to depression of the first user interface member (block **110**).

Optionally, the first user interface member can reside on the front of the device and the second can reside on the back of the device. When the front member is pushed in, the back key can be pushed out automatically substantially concurrently (block **115**).

**Figure 11** is a flow chart of exemplary operations that can be used to carry out embodiments of the invention. A first user interface member on a front of a portable device can be contacted to navigate and/or zoom in to content on the display (block **120**). A second user interface member on a back of the portable device can be contacted to navigate and/or zoom out of content on the display (block **125**).

A user can selectively engage a 3D navigation mode (block **121**).
Each member when contacted (*i.e.*, depressed) can automatically move a distance corresponding to a distance moved by the other to thereby provide tactile feedback to a user via the other member (block **123**).

Embodiments of the present invention are described below with reference to block diagrams and/or flowchart illustrations of methods, apparatus (systems) and/or computer program products according to embodiments of the invention. It is understood that each block of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

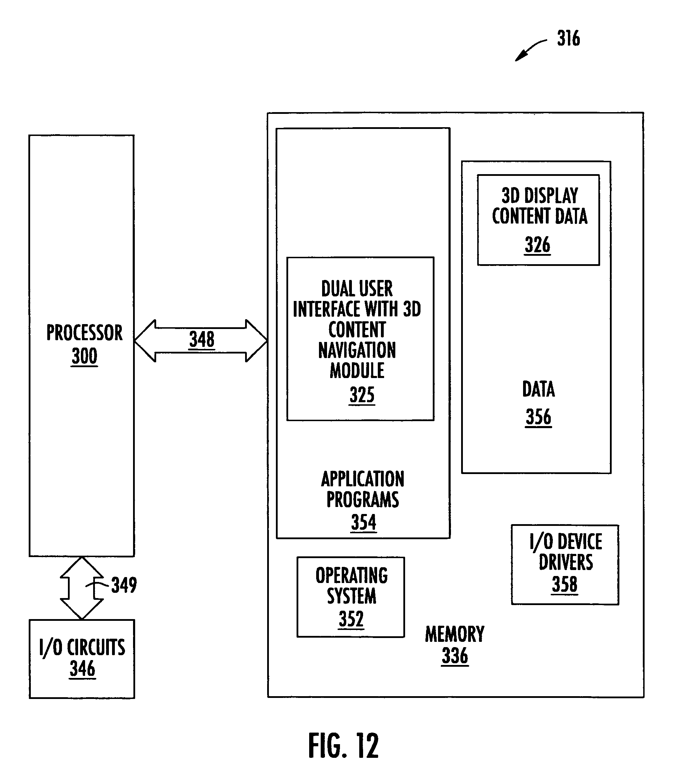

**Figure 12** is a block diagram of exemplary embodiments of data processing systems **316** that illustrates systems, methods, and/or computer program products in accordance with embodiments of the present invention. The processor **300** communicates with the memory **336** via an address/data bus **348**. The processor can also communicate with I/O circuits **346** via address/data bus **349** (which may be the same or different fro **348**). The processor **300** can be any commercially available or custom microprocessor. The memory **336** is representative of the overall hierarchy of memory devices containing the software and data used to implement the functionality of the data processing systems **316**. The memory **336** can include, but is not limited to, the following types of devices: cache, ROM, PROM, EPROM, EEPROM, flash memory, SRAM, and DRAM.

As shown in **Figure 12**, the memory **336** may include several categories of software and data used in the data processing system **310**: the operating system **352**; the application programs **354**; the input/output (I/O) device drivers **358**; a Dual User Interface 3D Content Navigation Module **325** that programmatically directs the 3D navigation based on input from one or both of the dual interface members; and data **356**.

The data **356** may include 3D Display content data **326** and incoming and/or outgoing communication signal data (not shown). As will be appreciated by those of skill in the art, the operating system **352** may be any operating system suitable for use with a data processing system, such as OS/2, AIX or OS/390 from International Business Machines Corporation, Armonk, NY, WindowsXP, WindowsCE, WindowsNT, Windows95, Windows98 or Windows2000 from Microsoft Corporation, Redmond, WA, PalmOS from Palm, Inc., MacOS from Apple Computer, UNIX, FreeBSD, or Linux, proprietary operating systems or dedicated operating systems, for example, for embedded data processing systems.

The I/O device drivers **358** typically include software routines accessed through the operating system **352** by the application programs **354** to communicate with devices such as I/O data port(s), data storage **356** and certain memory **336** components. The application programs **354** are illustrative of the programs that implement the various features of the data processing system **316** and can include at least one application that supports operations according to embodiments of the present invention. Finally, the data **356** represents the static and dynamic data used by the application programs **354**, the operating system **352**, the I/O device drivers **358**, and other software programs that may reside in the memory **336**.

The module **325** can also be configured to programmatically direct the tactile feedback between the first and second user interface members.

While the present invention is illustrated, for example, with reference to the Module **325** being an application program in **Figure 12**, as will be appreciated by those of skill in the art, other configurations may also be utilized while still benefiting from the teachings of the present invention. For example, the Module **325** may also be incorporated into the operating system **352**, the I/O device drivers **358** or other such logical division of the data processing system **316**. Thus, the present invention should not be construed as limited to the configuration of **Figure 12**, which is intended to encompass any configuration capable of carrying out the operations described herein.

The I/O data port can be used to transfer information between the data processing system **316** and a computer network (*e.g.*, the Intranet or Internet) or another computer or communication system or other device controlled by the processor. These components may be conventional components such as those used in many conventional data processing systems, which may be configured in accordance with the present invention to operate as described herein.

In the drawings and specification, there have been disclosed embodiments of the invention and, although specific terms are employed, they are used in a generic and descriptive sense only and not for purposes of limitation, the scope of the invention being set forth in the following claims. Thus, the foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. In the claims, means-plus-function clauses, where used, are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A portable device (10), comprising:
a portable housing (10h);
a display (20) held by the housing;
a first user interface member (35) residing on a first side of the housing configured to electronically navigate data on the display (20); and
a second user interface member (40) residing on a second opposite side portion of the housing configured to electronically navigate data on the display (20),
wherein the first and second user interface members (35, 40) are in communication whereby inward pressure exerted against the first user interface member (35) automatically concurrently causes outward pressure to be exerted against the second user interface member (40),
**characterized in that**
the first and second user interface members (35, 40) are configured to allow a user to electronically navigate data presented by the display (20) in X, Y and Z-axis directions.

2. The portable device (10) according to claim 1, wherein the first user interface member (35) resides on a front portion (10f) of the housing and wherein the second user interface member (40) resides on a back portion of the housing (10b).

3. The portable device (10) according to any one of the preceding claims, wherein inward pressure exerted against the second user interface member (40) automatically concurrently causes outward pressure to be exerted against the first user interface member (35).

4. A portable device (10) according to any one of the preceding claims, wherein the first user interface member (35) comprises a navigation key configured so that vertical depression allows a user to navigate content inwardly on the display (20), and wherein the second user interface member (40) comprises a navigation key configured so that vertical depression allows a user to navigate content outwardly on the display (20).

5. A portable device (10) according to any one of the preceding claims, wherein one of the first and second user interface members (35, 40) are configured to allow a user to navigate content in the X, Y and Z-axis directions, and the other of the first and second interface members (35, 40) is configured to allow a user to navigate content only in the Z axis direction.

6. A portable device (10) according to any one of the preceding claims, wherein the first user interface member (35) is configured to allow a user to electronically navigate in a first direction that extends in a direction that is into the display (20) in response to a user pushing the first user interface member (35) inward, and wherein the second user interface (40) is configured to electronically navigate content in a direction that extends out of the display (20) in response to a user pushing the second user interface member (40) inward.

7. A portable device (10) according to any one of the preceding claims, wherein the first user interface member (35) and the second user interface member (40) are in cooperating communication whereby inward movement of the first member automatically causes outward movement of the second member and inward movement of the second member automatically causes outward movement of the first member to thereby provide intuitive tactile feedback to a user corresponding to inward or outward navigation of content.

8. A portable device (10) according to any one of claims 2 - 7, wherein the first and second interface members (35, 40) are aligned, with the first interface member (35) residing above and/or in front of the second interface member (40) to allow a user to engage both interface members (35, 40) allowing a user to navigate in 3D without shifting finger position.

9. A portable device (10) according to any one of claims 2 - 7, wherein the first and second interface members (35, 40) are misaligned, with the first interface member (35) residing above and/or in front of the second interface member (40) to allow a user to engage both interface members (35, 40) allowing a user to navigate in 3D without shifting finger position.

10. A portable device (10) according to any one of the preceding claims, further comprising a 3-D navigational input that allows a user to activate a 3-D navigation mode whereby the first and second user interface members (35, 40) are both active user interface inputs.

11. A method for navigating content of data on a display on a front portion of a housing, comprising:
accepting user input via a first user interface member on the front of the housing to navigate content presented by a display;
accepting user input via a second user interface member on a back portion of the housing to navigate content presented by the display; and
navigating content in three-dimensions presented by the display in response to the user input to the first and second interface members without requiring shifts of finger positions to thereby allow a user to intuitively control navigational movement in three-dimensions;
wherein the accepting user input via the first user interface member comprises allowing a user to press the first interface member a distance in a direction that is into the display to navigate inward whereby the second user interface member automatically moves outward a corresponding distance;
and wherein the accepting user input via the second user interface member comprises allowing a user to press the second interface member a distance in a direction that is into the display to navigate upward whereby the first user interface member automatically moves outward a corresponding distance.

## Patentansprüche

1. Tragbare Anordnung (10), umfassend:
ein tragbares Gehäuse (10h);
eine durch das Gehäuse gehaltene Anzeige (20);
ein erstes Benutzeroberflächenelement (35), welches sich an einer ersten Seite des Gehäuses befindet und eingerichtet ist, um elektronisch Daten auf der Anzeige (20) zu navigieren; und
ein zweites Benutzeroberflächenelement (40), welches sich an einer zweiten gegenüber liegenden Seite des Gehäuses befindet und eingerichtet ist, um elektronisch Daten auf der Anzeige (20) zu navigieren,
wobei das erstes und das zweite Benuteroberflächenelement (35, 40) miteinander in Verbindung sind, wobei ein gegen das erste Benutzeroberflächenelement (35) ausgeübte Innendruck automatisch gleichzeitig einen gegen das zweite Benutzerflächenelement (40) ausgeübte Außendruck verursacht,
**dadurch gekennzeichnet, dass**
das erste und das zweite Benutzeroberflächenelement (35, 40) eingerichtet sind, um einen Anwender zu ermöglichen, durch die Anzeige (20) dargestellte Daten in X-, Y- und Z-Achsenrichtung elektronisch zu navigieren.

2. Tragbare Anordnung (10) nach Anspruch 1, wobei sich das erste Benutzeroberflächenelement (35) an einem Vorderabschnitt (10f) des Gehäuses befindet und wobei sich das zweite Benutzeroberflächenelement (40) an einem Hinterabschnitt des Gehäuses (10b) befindet.

3. Tragbare Anordnung (10) nach einem der vorhergehenden Ansprüche, wobei ein gegen das zweite Benutzeroberflächenelement (40) ausgeübte Innendruck automatisch gleichzeitig einen gegen das erste Benutzerflächenelement (35) ausgeübte Außendruck verursacht.

4. Tragbare Anordnung (10) nach einem der vorhergehenden Ansprüche, wobei das erste Benutzeroberflächenelement (35) eine Navigationstaste, welche so eingerichtet ist, dass ein vertikales Niederdrücken einen Benutzer ermöglicht, Inhalt auf dem Display (20) inwärts zu navigieren, umfasst, und wobei das weite Benutzeroberflächenelement (40) eine Navigationstaste, welche so eingerichtet ist, dass ein vertikales Niederdrücken einen Benutzer ermöglicht, Inhalt auf dem Display (20) auswärts zu navigieren, umfasst.

5. Tragbare Anordnung (10) nach einem der vorhergehenden Ansprüche, wobei eines der ersten und zweiten Benutzeroberflächenelemente (35, 40) eingerichtet ist, um einen Benutzer zu ermöglichen, Inhalt in den X-, Y- und Z-Achsenrichtungen zu navigieren, und das andere des ersten und des zweiten Benutzeroberflächenelements (35, 40) eingerichtet ist, um einen Benutzer zu ermöglichen, Inhalt nur in Z-Achsenrichtung zu navigieren.

6. Tragbare Anordnung (10) nach einem der vorhergehenden Ansprüche, wobei das erste Benutzeroberflächenelement (35) eingerichtet ist, um einen Benutzer zu ermöglichen, elektronisch Daten in eine erste Richtung, welche sich in eine in das Display zeigende Richtung erstreckt, als Reaktion auf einen Benutzer, welcher das erste Benutzeroberflächenelement (35) nach innen drückt, zu navigieren, und wobei das zweite Benutzeroberflächenelement (40) eingerichtet ist, um elektronisch Daten in eine Richtung, welche sich aus dem Display heraus erstreckt als Reaktion auf einen Benutzer, welcher das zweite Benutzeroberflächenelement (40) nach innen drückt, zu navigieren.

7. Tragbare Anordnung (10) nach einem der vorhergehenden Ansprüche, wobei das erste Benutzeroberflächenelement (35) und das zweite Benutzeroberflächenelement (40) zusammenwirkend in Verbindung stehen, wobei eine Bewegung nach innen des ersten Elements automatisch eine Bewegung nach außen des zweiten Elements bewirkt und eine Bewegung nach innen des zweiten Elements automatisch eine Bewegung nach außen des ersten Elements bewirkt, um dadurch intuitiv taktile Rückmeldung an einen Benutzer bereitzustellen entsprechend Inhaltssteuerung nach innen oder außen.

8. Tragbare Anordnung (10) nach einem der Ansprüche 2-7, wobei das erste und das zweite Benutzeroberflächenelement (35, 40) ausgerichtet sind, wobei sich das erste Benutzeroberflächenelement (35) über und/oder vor dem zweiten Benutzeroberflächenelement (40) befindet, um einen Benutzer zu ermöglichen, beide Benutzeroberflächenelemente (35, 40) zu erreichen, wobei einem Benutzer ermöglicht wird, dreidimensional ohne Verlagerung der Fingerposition zu navigieren.

9. Tragbare Anordnung nach einem der Ansprüche 2-7, wobei das erste und das zweite Benutzeroberflächenelement nicht ausgerichtet sind, wobei sich das erste Benutzeroberflächenelement (35) über und/oder vor dem zweiten Benutzeroberflächenelement (40) befindet, um einen Benutzer zu ermöglichen, beide Benutzeroberflächenelemente (35, 40) zu erreichen, wobei einem Benutzer ermöglicht wird, dreidimensional ohne Verlagerung der Fingerposition zu navigieren.

10. Tragbare Anordnung (10) nach einem der vorhergehenden Ansprüche, weiter umfassend eine 3-D-Navigationseingabe, welche einem Benutzer ermöglicht, einen 3-D-Navigationsmodus zu aktivieren, wobei das erste und das zweite Benutzeroberflächenelement (35, 40) beide aktive Benutzeroberflächeneingaben sind.

11. Verfahren zum Navigieren von Dateninhalt auf einer Anzeige auf einem Vorderabschnitt eines Gehäuses, umfassend:
Annehmen von einer Benutzereingabe durch ein erstes Benutzeroberflächenelement auf der Vorderseite des Gehäuses, um durch die Anzeige dargestellten Inhalt zu navigieren;
Annehmen einer Benutzereingabe durch ein zweites Benutzeroberflächenelement auf einem Hinterabschnitt des Gehäuses, um durch die Anzeige dargestellten Inhalt zu navigieren; und
Navigieren von durch die Anzeige dargestellten Inhalt in drei Dimensionen in Reaktion auf die Benutzereingabe an das erste und das zweite Benutzeroberflächenelement ohne Änderungen der Fingerpositionen zu benötigen, um dadurch einen Benutzer zu ermöglichen, intuitiv Navigationsbewegungen in drei Dimensionen zu kontrollieren;
wobei das Annehmen von Benutzereingaben über das erste Benutzeroberflächenelement Ermöglichen einen Benutzer, das erste Benutzeroberflächenelement eine Strecke in Richtung in die Anzeige zu drücken, um nach innen zu navigieren, wobei das zweite Benutzeroberflächenelement automatisch eine entsprechende Strecke nach außen bewegt wird, umfasst;
und wobei das Annehmen von Benutzereingaben über das zweite Benutzeroberflächenelement Ermöglichen einen Benutzer, das zweite Benutzeroberflächenelement eine Strecke in Richtung in die Anzeige zu drücken, um nach oben zu navigieren, wobei das erste Benutzeroberflächenelement automatisch eine entsprechende Strecke nach außen bewegt wird, umfasst.

## Revendications

1. Dispositif portatif (10), comprenant :
un boîtier portatif (10h) ;
un écran (20) maintenu par le boîtier ;
un premier élément (35) d'interface utilisateur se trouvant sur un premier côté du boîtier configuré pour naviguer électroniquement à travers des données sur l'écran (20) ; et
un deuxième élément (40) d'interface utilisateur se trouvant sur un deuxième côté opposé du boîtier configuré pour naviguer électroniquement à travers des données sur l'écran (20),
dans lequel les premier et deuxième éléments (35, 40) d'interface utilisateur sont en communication moyennant quoi une pression vers l'intérieur exercée contre le premier élément (35) d'interface utilisateur fait qu'en même temps une pression s'exerce automatiquement vers l'extérieur contre le deuxième élément (40) d'interface utilisateur,
**caractérisé en ce que**
les premier et deuxième éléments (35, 40) d'interface utilisateur sont configurés pour permettre à un utilisateur de naviguer électroniquement à travers des données présentées par l'écran (20) dans les directions des axes X, Y et Z.

2. Dispositif portatif (10) selon la revendication 1, dans lequel le premier élément (35) d'interface utilisateur se trouve sur une face avant (10f) du boîtier et dans lequel le deuxième élément (40) d'interface utilisateur se trouve sur une face arrière du boîtier (10b).

3. Dispositif portatif (10) selon l'une quelconque des revendications précédentes, dans lequel la pression vers l'intérieur exercée contre le deuxième élément (40) d'interface utilisateur fait qu'en même temps une pression s'exerce automatiquement vers l'extérieur contre le premier élément (35) d'interface utilisateur.

4. Dispositif portatif (10) selon l'une quelconque des revendications précédentes, dans lequel le premier élément (35) d'interface utilisateur comprend une touche de navigation configurée de sorte qu'en appuyant dessus dans le sens vertical un utilisateur peut naviguer à travers un contenu de manière rentrante sur l'écran (20), et dans lequel le deuxième élément (40) d'interface utilisateur comprend une touche de navigation configurée de sorte qu'en appuyant dessus dans le sens vertical un utilisateur peut naviguer à travers le contenu de manière sortante sur l'écran (20).

5. Dispositif portatif (10) selon l'une quelconque des revendications précédentes, dans lequel l'un des premier et deuxième éléments (35, 40) d'interface utilisateur est configuré pour permettre à un utilisateur de naviguer à travers le contenu dans les directions des axes X, Y et Z, et l'autre des premier et deuxième éléments (35, 40) d'interface est configuré pour permettre à un utilisateur de ne naviguer à travers le contenu que dans la direction de l'axe Z.

6. Dispositif portatif (10) selon l'une quelconque des revendications précédentes, dans lequel le premier élément (35) d'interface utilisateur est configuré pour permettre à un utilisateur de naviguer électroniquement dans une première direction qui s'étend dans une direction qui va vers l'intérieur de l'écran (20) répondant à une pression exercée par un utilisateur sur le premier élément (35) d'interface utilisateur vers l'intérieur, et dans lequel le deuxième élément (40) d'interface utilisateur est configuré pour naviguer électroniquement à travers un contenu dans une direction qui s'étend vers l'extérieur de l'écran (20) répondant à une pression exercée par un utilisateur sur le deuxième élément (40) d'interface utilisateur vers l'intérieur.

7. Dispositif portatif (10) selon l'une quelconque des revendications précédentes, dans lequel le premier élément (35) d'interface utilisateur et le deuxième élément (40) d'interface utilisateur communiquent en coopération moyennant quoi un déplacement vers l'intérieur du premier élément entraîne automatiquement un déplacement vers l'extérieur du deuxième élément et un déplacement vers l'intérieur du deuxième élément entraîne automatiquement un déplacement vers l'extérieur du premier élément pour fournir ainsi un retour tactile intuitif à un utilisateur qui correspond à une navigation rentrante ou sortante à travers le contenu.

8. Dispositif portatif (10) selon l'une quelconque des revendications 2 à 7, dans lequel les premier et deuxième éléments (35, 40) d'interface sont alignés, le premier élément (35) d'interface se trouvant au-dessus et/ou en face du deuxième élément (40) d'interface pour permettre à un utilisateur d'engager les deux éléments (35, 40) d'interface ce qui lui permet de naviguer en 3D sans changer la position du doigt.

9. Dispositif portatif (10) selon l'une quelconque des revendications 2 à 7, dans lequel les premier et deuxième éléments (35, 40) d'interface ne sont pas alignés, le premier élément (35) d'interface se trouvant au-dessus et/ou en face du deuxième élément de l'interface (40) pour permettre à un utilisateur d'engager les deux éléments (35, 40) d'interface ce qui lui permet de naviguer en 3D sans changer la position du doigt.

10. Dispositif portatif (10) selon l'une quelconque des revendications précédentes, comprenant en outre une entrée de navigation en 3D qui permet à un utilisateur d'activer un mode de navigation en 3D moyennant quoi les premier et deuxième éléments (35, 40) d'interface utilisateur sont deux entrées actives de l'interface utilisateur.

11. Procédé permettant de naviguer à travers un contenu de données sur un écran sur une face avant d'un boîtier, comprenant le fait :
d'accepter une saisie d'un utilisateur via un premier élément de l'interface utilisateur sur la face avant du boîtier pour naviguer à travers un contenu présenté par un écran ;
d'accepter une saisie de l'utilisateur via un deuxième élément d'interface utilisateur sur une face arrière du boîtier pour naviguer à travers un contenu présenté par l'écran ; et
de naviguer à travers un contenu en trois dimensions présenté par l'écran en réponse à la saisie de l'utilisateur aux premier et deuxième éléments d'interface sans avoir besoin de changer les positions des doigts pour permettre ainsi à un utilisateur de commander intuitivement un déplacement de navigation en trois dimensions ;
dans lequel l'acceptation de la saisie de l'utilisateur via le premier élément d'interface utilisateur comprend le fait de permettre à un utilisateur d'appuyer sur le premier élément d'interface sur une distance dans une direction qui va vers l'intérieur de l'écran pour naviguer vers l'intérieur moyennant quoi le deuxième élément d'interface utilisateur se déplace automatiquement vers l'extérieur d'une distance correspondante ;
et dans lequel l'acceptation de la saisie de l'utilisateur via le deuxième élément d'interface utilisateur comprend le fait de permettre à un utilisateur d'appuyer sur le deuxième élément d'interface sur une distance dans une direction qui va vers l'intérieur de l'écran pour naviguer vers le haut moyennant quoi le premier élément d'interface utilisateur se déplace automatiquement vers l'extérieur par une distance correspondante.
